# EUROPEAN PATENT APPLICATION

(11) **EP 3 852 051 A1**
(43) Date of publication of application: **21.07.2021**
(21) Application number: 18933289.3
(22) Date of filing: 12.09.2018
(51) Int. Cl.: G06T 7/00

(54) **BIOMETRIC AUTHENTICATION DEVICE, COUNTERFEIT DETERMINATION PROGRAM AND COUNTERFEIT DETERMINATION METHOD**

(71) Applicant: FUJITSU LIMITED, Kanagawa 211-8588 (JP)
(72) Inventor: ABE, Narishige, Kawasaki-shi, Kanagawa 211-8588 (JP)
(74) Representative: Hoffmann Eitle
(86) International application number: PCT/JP2018/033778
(87) International publication number: WO 2020/053984

(57) **Abstract**

Accuracy of determining a fake living body is improved. A living body authentication apparatus includes a detection unit configured to detect a moire generation region and a region related to living body information from image data captured, and a determination unit configured to determine whether the living body information contained in the image data is brought by capturing an image of a fake living body, based on a positional relationship between the moire generation region and the region related to the living body information.

## Description

### Technical Field

The embodiments discussed herein are related to a living body authentication apparatus, a fake determination program, and a fake determination method.

### Background Art

A living body authentication technique (for example, a face authentication technique or the like) has been known in which living body information is detected from image data obtained by capturing an image of a living body to perform authentication processing based on the detected living body information. In the case of such authentication processing, since it is easy to create a fake living body (for example, a photograph in which an image of a living body is captured, or the like), it is requested to accurately determine whether living body information contained in image data obtained by image-capturing is information brought by capturing an image of a living body or by capturing an image of a fake living body.

To address this, in the following NPL, a method is proposed in which fake determination is performed by making use of a phenomenon where moire is generated in image data in a case where there is a difference between an optical environment when an image of a living body was captured to create a fake living body and an optical environment when an image of the fake living body submitted in authentication processing is captured.

### Citation List

### Non Patent Literature

NPL 1: Diago Caetano Garcia et al., "Face-Spoofing 2D-Detection Based on Moire-pattern Analysis", IEEE TRANSACTIONS ON IFORMATION FORENSICS AND SECURITY, VOL. 10, NO. 4, APRIL 2015.

### Summary of Invention

### Technical Problem

However, even when an image of a living body (not a fake living body) is captured, moire may be generated in the image data depending on states at the time of image-capturing. For example, in a case where a living body is irradiated with light from a plurality of directions, and additionally in a case where a spectacle lens, an accessory, or the like having high reflectance is included in an image-capturing range, secretion such as sweat is attached to the surface of the living body, or the like, moire is generated in the image data even when an image of the living body is captured. In such case, according to the above-mentioned NPL, there is a possibility that living body information contained in the image data is erroneously determined to be information brought by capturing an image of a fake living body.

In one aspect, it is an object to improve the accuracy of determining a fake living body.

### Solution to Problem

According to one mode, a living body authentication apparatus includes:
a detection unit configured to detect a moire generation region and a region related to living body information from image data captured; and
a determination unit configured to determine whether the living body information contained in the image data is brought by capturing an image of a fake living body, based on a positional relationship between the moire generation region and the region related to the living body information.

### Advantageous Effects of Invention

It is possible to improve the accuracy of determining a fake living body.

### Brief Description of Drawings

[FIG. 1] FIG. 1 is a diagram illustrating a configuration example of a living body authentication apparatus.
[FIG. 2] FIG. 2 is a diagram illustrating an example of a hardware configuration of an information processing apparatus.
[FIG. 3] FIG. 3 is a diagram illustrating an example of a functional configuration of a fake determination section.
[FIG. 4] FIG. 4 is a diagram illustrating a specific example of processing by an image data acquisition unit.
[FIG. 5] FIG. 5 is a diagram illustrating a specific example of processing by a moire region detection unit.
[FIG. 6] FIG. 6 is a diagram illustrating a specific example of processing by a living body region detection unit.
[FIG. 7] FIG. 7 is a diagram illustrating a specific example of processing by a living body site region detection unit.
[FIG. 8] FIG. 8 is a diagram illustrating a specific example of processing by a determination unit.
[FIG. 9] FIG. 9 is a flowchart illustrating a flow of fake determination processing by a fake determination section.

### Description of Embodiments

Hereinafter, respective embodiments will be described with reference to the accompanying drawings. In the present specification and drawings, components having substantially same functional configurations are assigned with same reference numerals, and overlapping description is omitted.

### [First Embodiment]

### <Configuration of Living Body Authentication Apparatus>

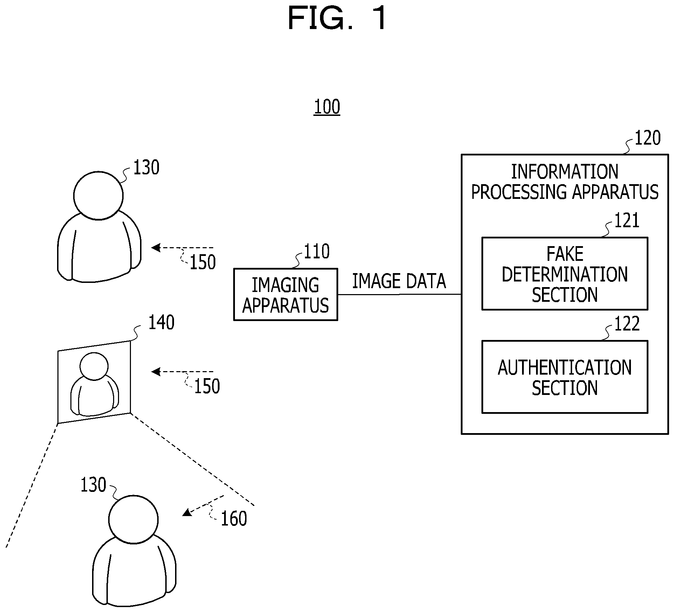

First, a configuration of a living body authentication apparatus will be described. FIG. 1 is a diagram illustrating a configuration example of a living body authentication apparatus. As illustrated in FIG. 1, a living body authentication apparatus 100 includes an imaging apparatus 110 and an information processing apparatus 120. In the living body authentication apparatus 100, the imaging apparatus 110 and the information processing apparatus 120 are communicably coupled to each other.

The imaging apparatus 110 transmits image data obtained by capturing an image of a subject to the information processing apparatus 120. The imaging apparatus 110 may include, for example, an infrared camera, a near-infrared camera, or the like configured to detect infrared rays radiated from the subject, in addition to a camera configured to detect reflected light from the subject as RGB signals.

In a first embodiment, the subject that is image-captured by the imaging apparatus 110 includes a person 130 as a living body. In a case where the subject is the person 130, image data obtained by the imaging apparatus 110 capturing an image of the subject, contains the face of the person 130 as living body information.

In the first embodiment, in a case where the imaging apparatus 110 captures an image of the person 130, it is assumed that the person 130 is irradiated with light traveling at least in a direction indicated by a dotted-line arrow 150.

However, the direction of light with which the person 130 is irradiated at the time of image-capturing by the imaging apparatus 110 is not limited to one direction, and there may be a plurality of directions for the light. In the example of FIG. 1, objects worn by the person 130 and a state in which the person 130 is sweating are omitted, but the person 130 may wear, for example, eyeglasses of lenses having high reflectance, accessories having high reflectance, or the like, or may be in a sweating state. In a case of being in such state at the time of image-capturing, moire is generated in image data obtained by the imaging apparatus 110 capturing an image of the person 130.

However, the person 130 as a living body includes living body sites having a three-dimensional structure such as the eyes, nose, mouth, and the like, and these living body sites have different light reflectance properties from each other. Therefore, in the case of image data obtained by the imaging apparatus 110 capturing an image of the person 130, moire is separately generated for each living body site of the person 130, and the moire is not generated extending over a plurality of living body sites.

On the other hand, in the first embodiment, a subject image-captured by the imaging apparatus 110 includes a fake living body like a photographic object 140, in which the face of the person 130 as a living body is photographed. Even when the subject image-captured by the imaging apparatus 110 is the photographic object 140, the face of the person 130 is contained as living body information in the image data obtained by the imaging apparatus 110 capturing an image of the subject.

It is assumed that the photographic object 140 is created by performing image-capturing by an imaging apparatus (not illustrated) in a state in which the person 130 is irradiated with light traveling in a direction indicated by a dotted-line arrow 160.

In such case, when the imaging apparatus 110 captures an image of the photographic object 140 in a state in which light is irradiated in the direction indicated by the dotted-line arrow 150, the person 130 in the photographic object 140 is irradiated with light from at least two directions (the dotted-line arrows 150 and 160). Therefore, moire is reliably generated in the image data obtained by the imaging apparatus 110 capturing the image of the photographic object 140.

Since the photographic object 140 is a two-dimensional plane, the overall photographic object 140 has a uniform light reflectance property. Therefore, the generated moire extends over a wider range, so that the moire extends over the person 130 and the background photographed in the photographic object 140, extends over a plurality of living body sites (the eyes, nose, mouth, and the like) of the person 130 photographed in the photographic object 140, or the like. In the living body authentication apparatus 100 according to the first embodiment, fake determination is performed by utilizing a difference in the manner in which the moire is generated as discussed above.

In the example of FIG. 1, the manner in which the moire is generated when a fake living body is the photographic object 140 is described, but the fake living body is not limited to the photographic object 140. For example, even in a display screen of a mobile terminal (a smartphone, tablet, or the like) on which photographic data in which the face of the person 130 is photographed is displayed, moire having the same features may be generated, and thus the display screen may become a fake living body.

A fake determination program and an authentication program are installed in the information processing apparatus 120, and the information processing apparatus 120 functions as a fake determination section 121 and an authentication section 122 by executing the programs.

The fake determination section 121 determines whether living body information contained in the image data transmitted from the imaging apparatus 110 is brought by capturing an image of a fake living body or by capturing an image of a living body, and notifies the authentication section 122 of the determination result. For example, first, the fake determination section 121 detects a region in which moire is generated in the image data (a "moire generation region") and a "region related to living body information". Then, the fake determination section 121 judges a positional relationship between the moire generation region and the region related to the living body information, thereby determining whether the living body information is brought by capturing the image of the fake living body or capturing the image of the living body. It is assumed that the region related to the living body information includes a region including living body information (a "living body region") and a region including living body sites included in the living body information (a "living body site region").

As the positional relationship between the moire generation region and the region related to the living body information, the fake determination section 121 judges, for example, whether the moire generation region extends over a contour portion of the living body region. Alternatively, the fake determination section 121 judges whether the moire generation region extends over a plurality of living body site regions.

This is because, as described above, in a case where the moire extends over the contour portion of the living body region (in a case where the moire extends over the face of the person 130 and the background), it is possible to determine that the face of the person 130 is brought by capturing the image of the fake living body. Alternatively, this is because, in a case where the moire extends over a plurality of living body site regions (in a case where the moire extends over the eyes, nose, mouth, and the like in the face of the person 130), it is possible to determine that the face of the person 130 is brought by capturing the image of the fake living body.

In a case where the fake determination section 121 has notified the authentication section 122 of the determination result that the living body information contained in the image data is not brought by capturing the image of the fake living body (but brought by capturing the image of the living body), the authentication section 122 performs authentication processing on the living body information contained in the image data.

### <Hardware Configuration of Information Processing Apparatus>

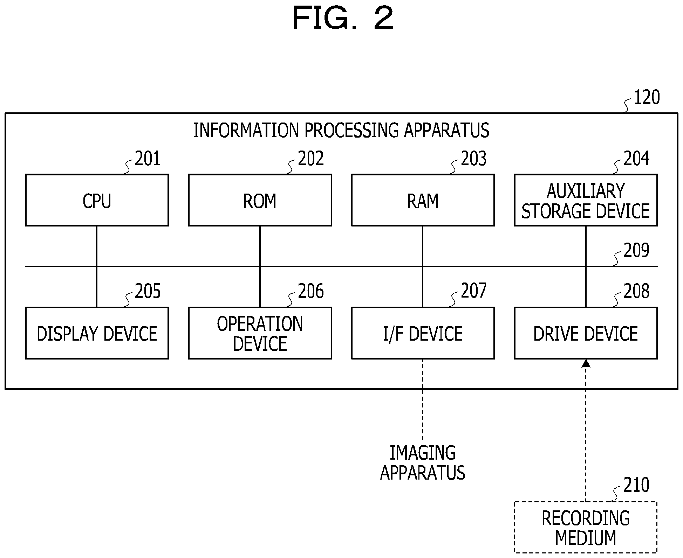

Next, the hardware configuration of the information processing apparatus 120 is described. FIG. 2 illustrates an example of the hardware configuration of the information processing apparatus. As illustrated in FIG. 2, the information processing apparatus 120 includes a central processing unit (CPU) 201, a read-only memory (ROM) 202, and a random-access memory (RAM) 203. The CPU 201, the ROM 202, and the RAM 203 form a so-called computer.

The information processing apparatus 120 further includes an auxiliary storage device 204, a display device 205, an operation device 206, an interface (I/F) device 207, and a drive device 208. Hardware components of the information processing apparatus 120 are coupled to each other via a bus 209.

The CPU 201 is a device configured to execute various programs installed in the auxiliary storage device 204 (for example, the fake determination program, the authentication program, and the like).

The ROM 202 is a non-volatile memory. The ROM 202 functions as a main storage device configured to store various programs, data, and the like to be used by the CPU 201 to execute the various programs installed in the auxiliary storage device 204. For example, the ROM 202 functions as a main storage device that stores a boot program such as a Basic Input/Output System (BIOS) and an Extensible Firmware Interface (EFI).

The RAM 203 is a volatile memory such as a dynamic random-access memory (DRAM) or a static random-access memory (SRAM). The RAM 203 functions as the main storage device that provides a work area where the various programs installed in the auxiliary storage device 204 are expanded for execution by the CPU 201.

The auxiliary storage device 204 is an auxiliary storage device configured to store the various programs and information created through the execution of the various programs.

The display device 205 is a display device configured to display an internal state or the like of the information processing apparatus 120. The operation device 206 is an input device used when an administrator of the information processing apparatus 120 inputs various commands to the information processing apparatus 120.

The I/F device 207 is a communication device configured to couple the imaging apparatus 110 and the information processing apparatus 120 to each other and allows the information processing apparatus 120 to communicate with the imaging apparatus 110.

The drive device 208 is a device in which a recording medium 210 is set. The recording medium 210 discussed herein include medium that record information optically, electrically, and magnetically like a CD-ROM, a flexible disk, a magneto-optical disk, and the like. The recording medium 210 may also include a semiconductor memory and the like, such as the ROM, or a flash memory, which records information electrically.

The various programs to be installed in the auxiliary storage device 204 are installed, for example, as the distributed recording medium 210 is set in the drive device 208, and the various programs recorded in the recording medium 210 are read by the drive device 208. Alternatively, the various programs to be installed in the auxiliary storage device 204 may be installed by being downloaded from a network.

### <Functional Configuration of Fake Determination Section>

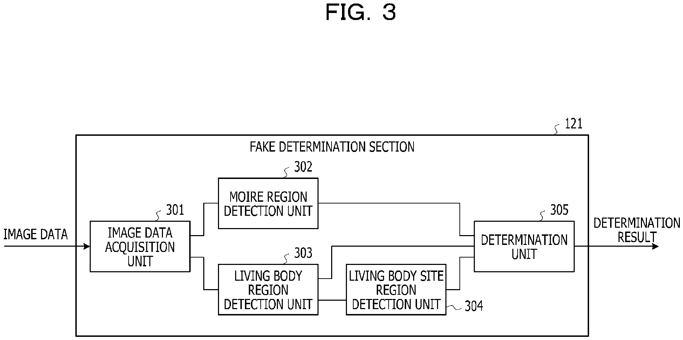

Next, a functional configuration of the fake determination section 121 will be described. FIG. 3 is a diagram illustrating an example of a functional configuration of a fake determination section. As illustrated in FIG. 3, the fake determination section 121 includes an image data acquisition unit 301, a moire region detection unit 302 of an example of a detection unit, a living body region detection unit 303, a living body site region detection unit 304, and a determination unit 305.

The image data acquisition unit 301 acquires image data transmitted from the imaging apparatus 110, and notifies the moire region detection unit 302 and the living body region detection unit 303 of the acquired image data.

The moire region detection unit 302 detects a moire generation region in the image data notified by the image data acquisition unit 301. The moire region detection unit 302 notifies the determination unit 305 of mask data for specifying the moire generation region.

The living body region detection unit 303 detects a region including living body information (herein, the face of the person 130) as a living body region in the image data notified by the image data acquisition unit 301. Further, the living body region detection unit 303 notifies the living body site region detection unit 304 of image data in the living body region, and also notifies the determination unit 305 of mask data for specifying the living body region.

The living body site region detection unit 304 detects a region including living body sites (for example, the eyes, nose, mouth, and the like of the person 130) as a living body site region from image data in the living body region notified by the living body region detection unit 303. Further, the living body site region detection unit 304 notifies the determination unit 305 of position coordinates in the image data for specifying the living body site region.

The determination unit 305 compares the mask data for specifying the moire generation region notified by the moire region detection unit 302 with the mask data for specifying the living body region notified by the living body region detection unit 303. Thus, the determination unit 305 judges whether the moire generation region extends over a contour portion of the living body region (herein, a contour portion of the face of the person 130).

Further, the determination unit 305 compares the mask data for specifying the moire generation region notified by the moire region detection unit 302 with the position coordinates in the image data for specifying the living body site region notified by the living body site region detection unit 304. Thus, the determination unit 305 judges whether the moire generation region extends over a plurality of living body site regions (herein, regions including a plurality of living body sites (the eyes, nose, mouth, and the like) in the face of the person 130).

In a case where it is judged that the moire generation region extends over the contour portion of the living body region, the determination unit 305 determines that the living body information contained in the image data is brought by capturing the image of the fake living body. In a case where it is judged that the moire generation region extends over a plurality of living body site regions, the determination unit 305 determines that the living body information contained in the image data is brought by capturing the image of the fake living body.

On the other hand, in a case where it is judged that the moire generation region does not extend over the contour portion of the living body region, and that the moire generation unit does not extend over a plurality of living body site regions, the determination unit 305 determines that the living body information contained in the image data is brought by capturing the image of the living body.

The determination unit 305 notifies the authentication section 122 of a determination result of the determination of whether the living body information contained in the image data is brought by capturing the image of the fake living body or by capturing the image of the living body.

### <Specific Example of Processing by Each Unit in Fake Determination Section >

Next, a specific example of processing carried out by each of the units (the image data acquisition unit 301, moire region detection unit 302, living body region detection unit 303, living body site region detection unit 304, and determination unit 305) included in the fake determination section will be described.

### (1) Specific Example of Processing by Image Data Acquisition Unit

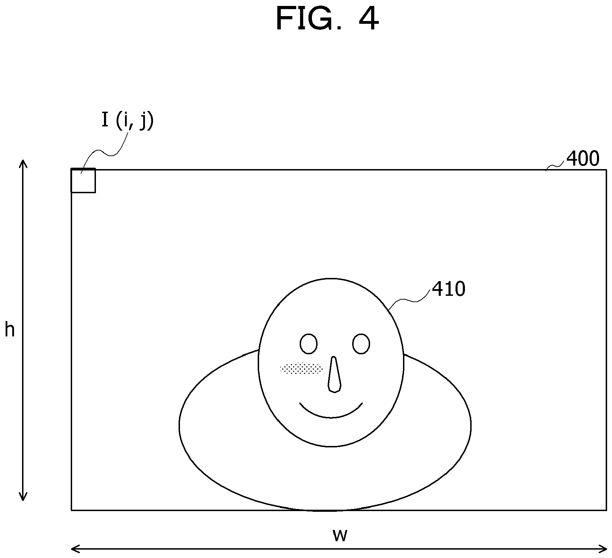

A specific example of processing by the image data acquisition unit 301 will be described first. FIG. 4 is a diagram illustrating a specific example of processing by the image data acquisition unit. As illustrated in FIG. 4, in the first embodiment, it is assumed that a width w and a height h represent the size of image data 400 acquired by the image data acquisition unit 301. A pixel value of each of pixels in the image data 400 is defined as I (i, j), for example.

As illustrated in FIG. 4, it is assumed that the image data 400 includes a region 410 in which the face of the person 130 is depicted as living body information.

### (2) Specific Example of Processing by Moire Region Detection Unit

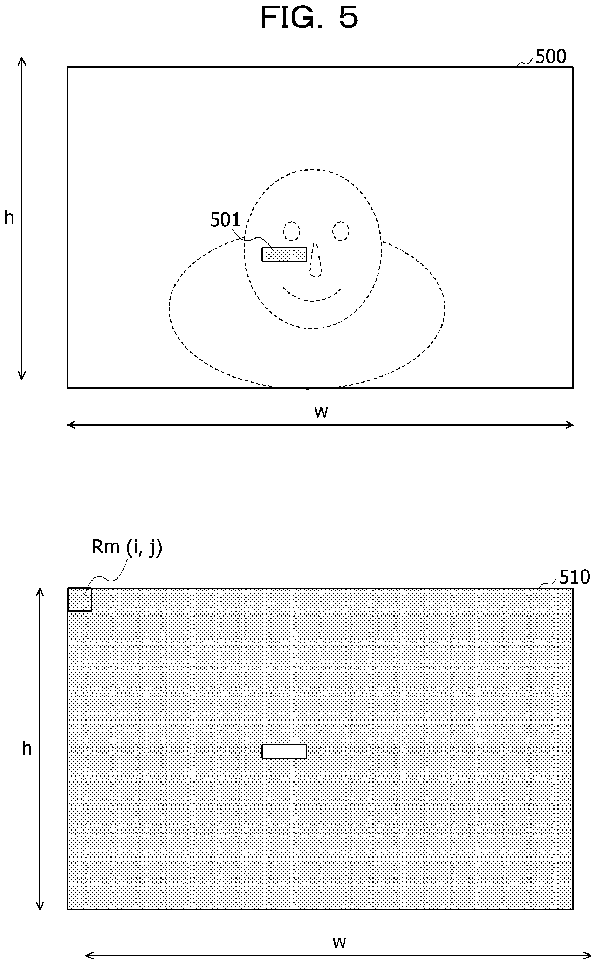

Next, a specific example of processing by the moire region detection unit 302 will be described. FIG. 5 is a diagram illustrating a specific example of processing by the moire region detection unit. In image data 500 of FIG. 5, a state is illustrated in which the moire region detection unit 302 has detected a moire generation region 501 in the image data 400 notified by the image data acquisition unit 301.

As illustrated in FIG. 5, when the moire region detection unit 302 has detected the moire generation region 501 in the image data 400, the moire region detection unit 302 creates mask data 510 and notifies the determination unit 305 of the mask data 510. The mask data 510 is data in which the detected moire generation region is taken as Rm (i, j) = "0" (non-mask region) and a region other than the detected moire generation region is taken as Rm (i, j) = "1" (mask region). It is assumed that the size of the mask data 510 is equal to that of the image data 400, where the width is w and the height is h.

### (3) Specific Example of Processing by Living Body Region Detection Unit

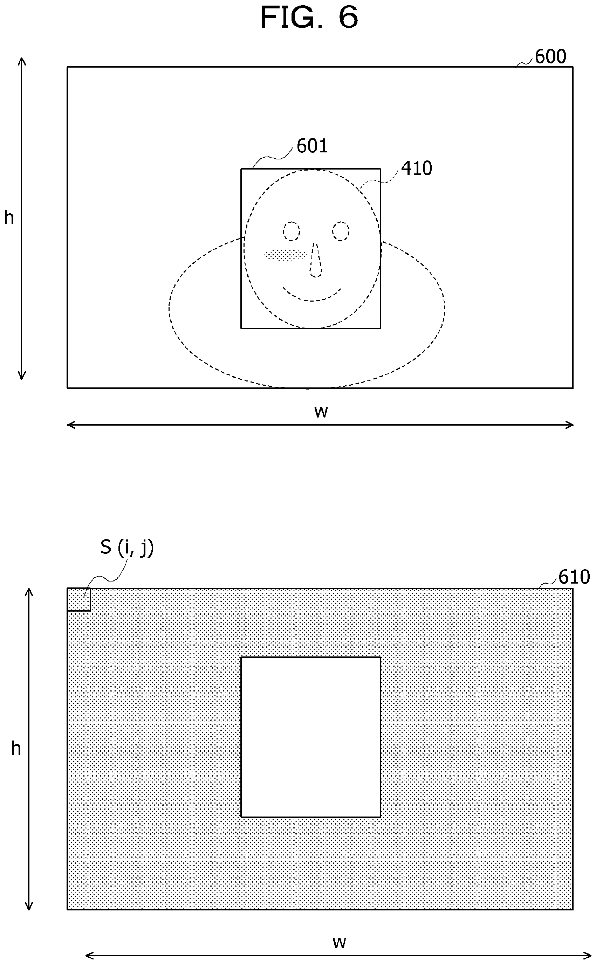

Next, a specific example of processing by the living body region detection unit 303 will be described. FIG. 6 is a diagram illustrating a specific example of processing by the living body region detection unit. In image data 600 of FIG. 6, a state is illustrated in which the living body region detection unit 303 has detected the face of the person 130 as a living body region 601 in the image data 400 notified by the image data acquisition unit 301.

When the living body region 601 has been detected in the image data 400, the living body region detection unit 303 notifies the living body site region detection unit 304 of image data in the living body region 601.

When the living body region 601 has been detected in the image data 400, the living body region detection unit 303 creates mask data 610 as illustrated in FIG. 6, and notifies the determination unit 305 of the mask data 610. The mask data 610 is data in which the detected living body region is taken as S (i, j) = "0" (non-mask region) and a region other than the detected living body region is taken as S (i, j) = "1" (mask region). It is assumed that the size of the mask data 610 is equal to that of the image data 400, where the width is w and the height is h.

### (4) Specific Example of Processing by Living Body Site Region Detection Unit

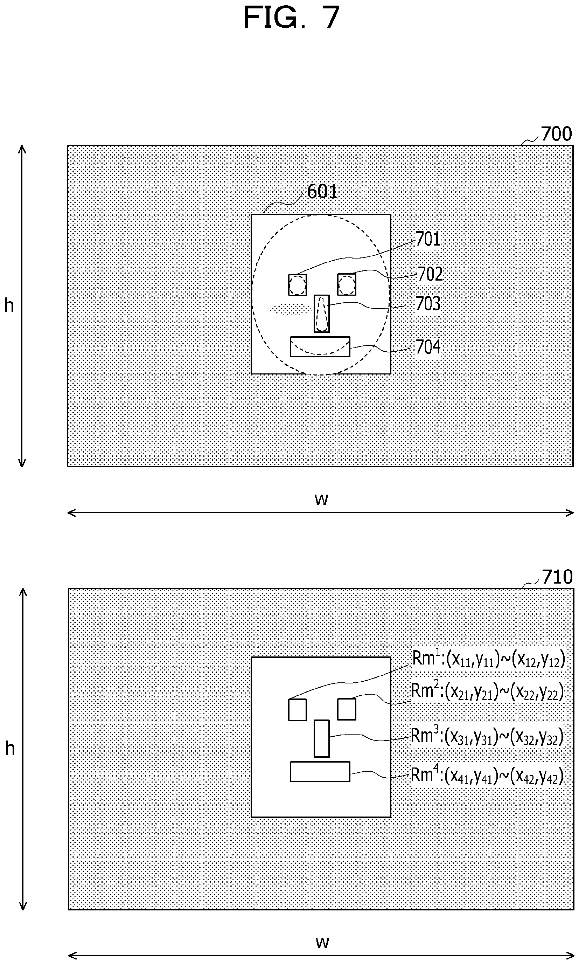

Next, a specific example of processing by the living body site region detection unit 304 will be described. FIG. 7 is a diagram illustrating a specific example of processing by the living body site region detection unit. In image data 700 of FIG. 7, the image data in the living body region 601 notified by the living body region detection unit 303 is illustrated while masking an area other than the living body region 601.

The image data 700 depicts a state in which the living body site region detection unit 304 has detected living body site regions 701, 702, 703, and 704 from the image data in the living body region 601.

As illustrated in FIG. 7, when the living body site regions are detected, the living body site region detection unit 304 puts labels on the detected living body site regions 701, 702, 703, and 704, and then notifies the determination unit 305 of the labeled living body site regions being associated with position coordinates. In FIG. 7, living body site region data 710 depicts a state in which labels Rm¹ to Rm⁴ are put on the detected living body site regions 701 to 704 respectively, and each label is associated with upper left and lower right position coordinates of each living body site region as the position coordinates of each living body site region.

### (5) Specific Example of Processing by Determination Unit

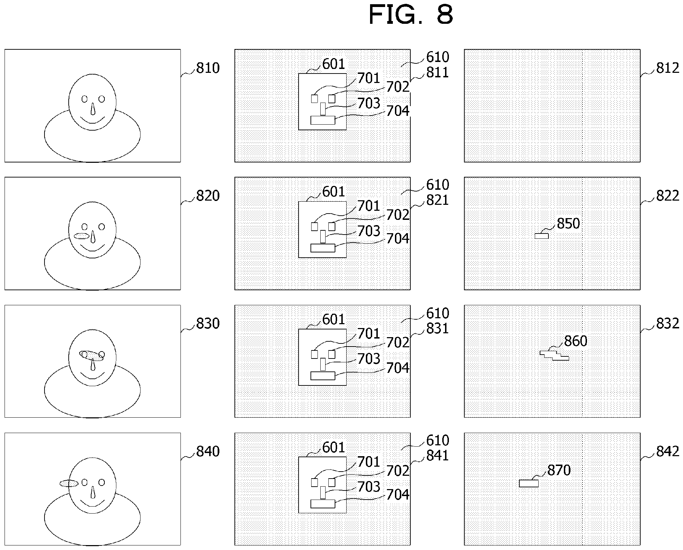

Next, a specific example of processing by the determination unit 305 will be described. FIG. 8 is a diagram illustrating a specific example of processing by the determination unit. In FIG. 8, four types of image data are indicated by image data 810, 820, 830, and 840, in which the size, position, shape, and the like of the generated moire are different.

In FIG. 8, pieces of data for determination 811, 821, 831, and 841 are data indicating,
- the mask data 610 for specifying the living body region, and
- the position coordinates in the image data (the position coordinates of Rm¹ to Rm⁴) for specifying the living body site regions,
acquired by the determination unit 305 from the living body region detection unit 303 and the living body site region detection unit 304, with respect to the image data 810, 820, 830, and 840, respectively.

For the sake of convenience, FIG. 8 illustrates, as the data for determination 811, 821, 831, and 841, the living body region 601 detected in the image data 810, 820, 830, and 840, in addition to the mask data 610. Further, as the data for determination 811, 821, 831, and 841, the living body site regions 701 to 704 are illustrated in place of the position coordinates of the living body site regions.

In FIG. 8, pieces of mask data 812, 822, 832, and 842 indicate mask data acquired by the determination unit 305 from the moire region detection unit 302, with respect to the image data 810, 820, 830, and 840, respectively.

When the data for determination 811 and the mask data 812 are compared with each other, no moire generation region exists in the mask data 812. Therefore, the determination unit 305 judges that there is no moire generation region extending over a contour portion of the living body region 601. The determination unit 305 also judges that there is no moire generation region extending over a plurality of the living body site regions 701 to 704. Thus, the determination unit 305 determines that the living body information contained in the image data 810 is brought by capturing the image of the living body.

When the data for determination 821 and the mask data 822 are compared with each other, the mask data 822 includes a moire generation region 850, but the moire generation region 850 does not extend over the contour portion of the living body region 601. Furthermore, the moire generation region 850 does not extend over any of the living body site regions 701 to 704. Thus, the determination unit 305 determines that the living body information contained in the image data 820 is brought by capturing the image of the living body.

On the other hand, when the data for determination 831 and the mask data 832 are compared with each other, the mask data 832 includes a moire generation region 860, and the moire generation region 860 extends over a plurality of living body site regions among the living body site regions 701 to 704. Thus, the determination unit 305 determines that the living body information contained in the image data 830 is brought by capturing the image of the fake living body.

When the data for determination 841 and the mask data 842 are compared with each other, the mask data 842 includes a moire generation region 870, and the moire generation region 870 extends over the contour portion of the living body region 601. Thus, the determination unit 305 determines that the living body information contained in the image data 840 is brought by capturing the image of the fake living body.

As described above, by comparing the positional relationship between the moire generation region and the living body region as well as the living body site regions, it is possible for the determination unit 305 to determine with high accuracy whether the living body information contained in the image data is brought by capturing the image of the fake living body or by capturing the image of the living body.

### <Fake Determination Processing by Fake Determination Section>

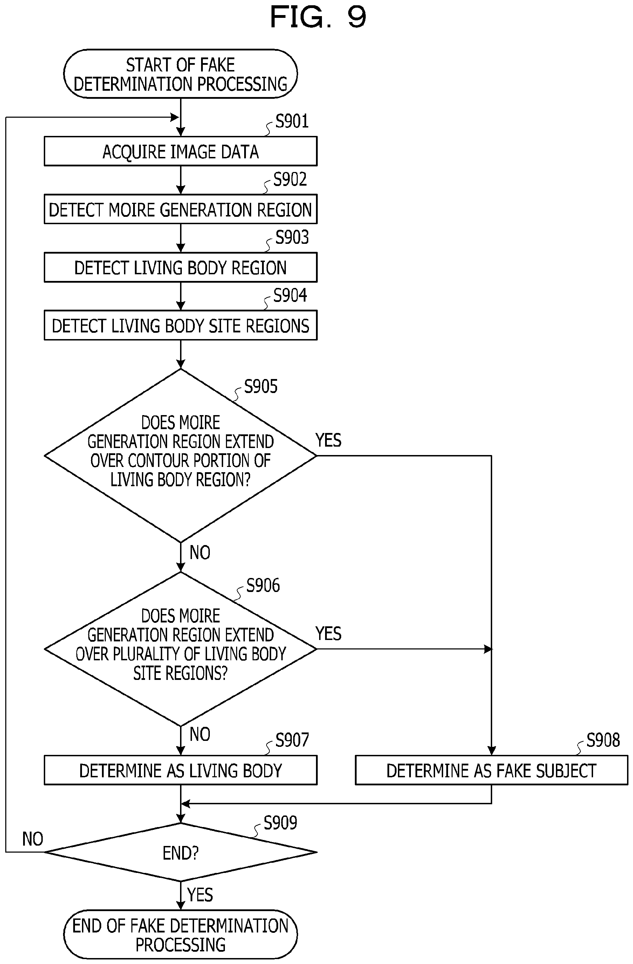

Next, a specific example of fake determination processing by the fake determination section 121 will be described. FIG. 9 is a flowchart illustrating a flow of fake determination processing by the fake determination section. When the fake determination section 121 is activated, the flowchart illustrated in FIG. 9 is put into action.

In step S901, the image data acquisition unit 301 acquires image data transmitted from the imaging apparatus 110.

In step S902, the moire region detection unit 302 detects a moire generation region in the image data.

In step S903, the living body region detection unit 303 detects a living body region in the image data.

In step S904, the living body site region detection unit 304 detects living body site regions from image data in the living body region.

In step S905, the determination unit 305 judges whether the moire generation region extends over a contour portion of the living body region. When it is judged in step S905 that the moire generation region extends over the contour portion of the living body region (in the case of YES in step S905), the flow goes to step S908.

In step S908, the determination unit 305 determines that the living body information contained in the image data is brought by capturing an image of a fake living body.

On the other hand, when it is judged in step S905 that the moire generation region does not extend over the contour portion of the living body region (in the case of NO in step S905), the flow goes to step S906.

In step S906, the determination unit 305 judges whether the moire generation region extends over a plurality of living body site regions. When it is judged in step S906 that the moire generation region extends over the plurality of living body site regions (in the case of YES in step S906), the flow goes to step S908.

On the other hand, when it is judged in step S906 that the moire generation region does not extend over the plurality of living body site regions (in the case of NO in step S906), the flow goes to step S907.

In step S907, the determination unit 305 determines that the living body information contained in the image data is brought by capturing an image of a living body.

In step S909, the image data acquisition unit 301 judges whether to end the fake determination processing. When it is judged in step S909 to continue the fake determination processing (in the case of NO in step S909), the flow returns to step S901. On the other hand, when it is judged in step S909 to end the fake determination processing, the fake determination processing is ended.

As is apparent from the above description, the living body authentication apparatus 100 according to the first embodiment includes the fake determination section 121, and the fake determination section 121 detects a moire generation region, a living body region, and a living body site region from captured image data. Based on the positional relationship between the detected moire generation region and the detected living body region as wells as living body site region, the fake determination section 121 determines whether the living body information contained in the image data is brought by capturing an image of a fake living body.

With this, also in a case where moire is generated in image data due to the states at the time of image-capturing, it is possible, according to the fake determination section 121, to lower the possibility that the living body information contained in the image data is erroneously determined to be information brought by capturing an image of a fake living body even when an image of a living body has been captured. As a result, with the living body authentication apparatus 100 according to the first embodiment, it is possible to improve the accuracy of determining a fake living body base on the moire.

### [Second Embodiment]

In the first embodiment, the face authentication processing is cited as authentication processing that is performed based on living body information contained in image data, but the authentication processing that is performed based on the living body information contained in the image data is not limited to the face authentication processing. For example, it may be iris authentication processing or fingerprint authentication processing.

Although the imaging apparatus 110 and the information processing apparatus 120 are provided as separate apparatuses in the above-described first embodiment, the imaging apparatus 110 and the information processing apparatus 120 may be integrated to be a single apparatus. Although it is described that the information processing apparatus 120 includes the fake determination section 121 and the authentication section 122 in the first embodiment described above, the fake determination section 121 and the authentication section 122 may be implemented in different apparatuses.

The present disclosure is not limited to the configurations illustrated herein while the configurations exemplified according to the aforementioned embodiments may also be combined with other elements, for example. These aspects may be changed without departing from the gist of the present disclosure and appropriately set in accordance with applied modes thereof.

### Reference Signs List

- 100: LIVING BODY AUTHENTICATION APPARATUS
- 110: IMAGING APPARATUS
- 120: INFORMATION PROCESSING APPARATUS
- 121: FAKE DETERMINATION SECTION
- 122: AUTHENTICATION SECTION
- 301: IMAGE DATA ACQUISITION UNIT
- 302: MOIRE REGION DETECTION UNIT
- 303: LIVING BODY REGION DETECTION UNIT
- 304: LIVING BODY SITE REGION DETECTION UNIT
- 305: DETERMINATION UNIT
- 501: MOIRE GENERATION REGION
- 601: LIVING BODY REGION
- 701 to 704: LIVING BODY SITE REGION

## Claims

1. A living body authentication apparatus, comprising:
a detection unit configured to detect a moire generation region and a region related to living body information from image data captured; and
a determination unit configured to determine whether the living body information contained in the image data is brought by capturing an image of a fake living body, based on a positional relationship between the moire generation region and the region related to the living body information.

2. The living body authentication apparatus according to claim 1,
wherein the detection unit includes,
a living body region detection unit configured to detect a living body region that is a region including the living body information, and
a living body site region detection unit configured to detect a living body site region that is a region including a living body site in the living body region.

3. The living body authentication apparatus according to claim 2,
wherein the determination unit determines whether the living body information contained in the image data is brought by capturing an image of a fake living body, by judging whether the moire generation region extends over a contour portion of the living body region.

4. The living body authentication apparatus according to claim 2,
wherein the determination unit determines whether the living body information contained in the image data is brought by capturing an image of a fake living body, by judging whether the moire generation region extends over a plurality of the living body site regions.

5. A fake determination program for causing a computer to execute a process, the process comprising:
detecting a moire generation region and a region related to living body information from image data captured; and
determining, based on a positional relationship between the moire generation region and the region related to the living body information, whether the living body information contained in the image data is brought by capturing an image of a fake living body.

6. A fake determination method for causing a computer to execute a process, the process comprising:
detecting a moire generation region and a region related to living body information from image data captured; and
determining, based on a positional relationship between the moire generation region and the region related to the living body information, whether the living body information contained in the image data is brought by capturing an image of a fake living body.
